# EUROPEAN PATENT SPECIFICATION

(11) **EP 1 673 874 B1**
(45) Date of publication and mention of the grant of the patent: **03.11.2010**
(21) Application number: 04782294.5
(22) Date of filing: 26.08.2004
(51) Int. Cl.: H04B 1/08

(54) **PORTABLE BATTERY CHARGING AND AUDIO UNIT**
TRAGBARE BATTERIELADE- UND AUDIOEINHEIT
UNITE AUDIO ET DE CHARGEMENT DE BATTERIES PORTATIVE

(30) Priority: 14.10.2003 US 685280
(43) Date of publication of application: 28.06.2006
(73) Proprietor: Credo Technology Corporation, Broadview, Illinois 60155 (US)
(72) Inventor: HIRSCHBURGER, Wolfgang, 72762 Reutlingen (DE); COE, Randall, Chicago, IL 60641 (US); COLE, steven, W., Lombard, IL 60148 (US); CHEUNG, Kam, Chow, Markham, Ontario L3P 4B2 (CA)
(74) Representative: Barth, Stephan Manuel
(86) International application number: PCT/US2004/027785
(87) International publication number: WO 2005/041428

(56) References cited:
- EP-A- 0 511 740
- US-A- 5 810 168
- US-A1- 2001 040 798
- US-A1- 2002 077 073

## Description

This invention generally relates to portable audio and battery pack charging equipment, as defined in the preamble of claim 1 which is known from US 2002/077 073 A1 and EP 0 511 740 A1.

### Background Art

US 2001/0040 798 A1 discloses an emergency lighting system wherein a relay is controlled by an AC voltage tap such that batteries are connected in case of AC power loss.

Cordless power tools are frequently found and used in locations that do not have readily available or convenient sources of power. These locations include construction sites and partially completed buildings. At locations such as these, the battery operated tools provide an obvious advantage, but the battery packs eventually become depleted and need to be recharged. While some users bring a sufficient number of battery packs to last for a complete day, at some stage of the construction, there is generally at least temporary electrical service provided which may enable battery packs to be recharged on the construction site. The location of the temporary electrical service may be some distance from the actual work location and since the charger may be located some distance from the user, issues can arise that may prevent the successful completion of a charging operation. For example, another worker may take a battery pack for his own use, or the charger may simply be unplugged so that some other operation may be performed, since the number of available receptacles may be limited.

Workers also like to take audio equipment such as portable radios to construction sites so that they can listen to music and other programs while they are working. It is well known that construction sites present a tough environment for such audio equipment which is prone to being damaged over time for obvious reasons.

### Disclosure Of Invention

The invention provide an apparatus as defined in claim 1 which provides an audio output and charges removable battery packs as well as providing a number of AC receptacles for powering other tools and the like when the unit is connected to a source of AC power. The unit can optionally also provide DC power. When the unit is connected to a source of AC power, the AC power drives the audio unit which may be a radio or a combination radio and CD player and the AC source also powers a charger which recharges a battery pack if a battery pack is inserted into the charger receptacle. If the unit is not connected to a source of AC power, the radio may be powered by a battery pack when it is placed in the charger receptacle. When the unit is connected to a source of AC power, a relay is opened to isolate the radio unit from the charger and battery pack.

The unit has a unique protective frame structure that is connected to the housing of the unit. The preferred embodiment of the present invention also has a circuit that includes a relay that is adapted to isolate the battery pack and charger from the audio unit when a relay coil senses that AC power is being applied to the audio unit. If AC power is not sensed, the relay is closed so that a battery pack can drive the audio unit.

### Description of the Drawings

FIGURE 1 is a perspective view of the front and left sides of the preferred embodiment of the present invention;
FIG. 2 is a plan view of the front of the preferred embodiment shown in FIG. 1;

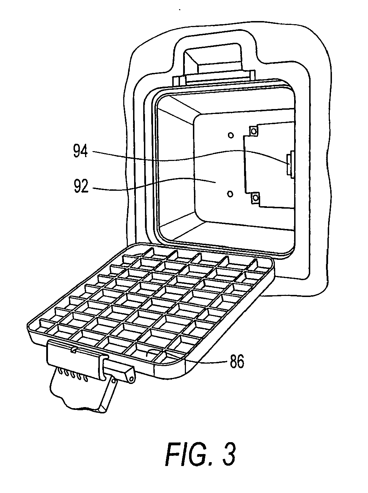

FIG. 3 is a perspective view of the rear and left side of the preferred embodiment shown in FIG. 1;
FIG. 4 is a plan view of the rear wall of the preferred embodiment shown in FIG. 1;
FIG. 5 is a plan view of the rear wall of the preferred embodiment shown in FIG. 1, with the door opened to show the charging receptacle;
FIG. 6 is a plan view of the left side of the preferred embodiment shown in FIG. 1;
FIG. 7 is a plan view of a small portion of the right side of the preferred embodiment shown in FIG. 1;
FIG. 8 is a plan view of the top of the preferred embodiment shown in FIG. 1; and
FIG. 9 is a simplified electrical schematic diagram of the preferred embodiment of the present invention.

### Best Mode of Carrying Out the Invention

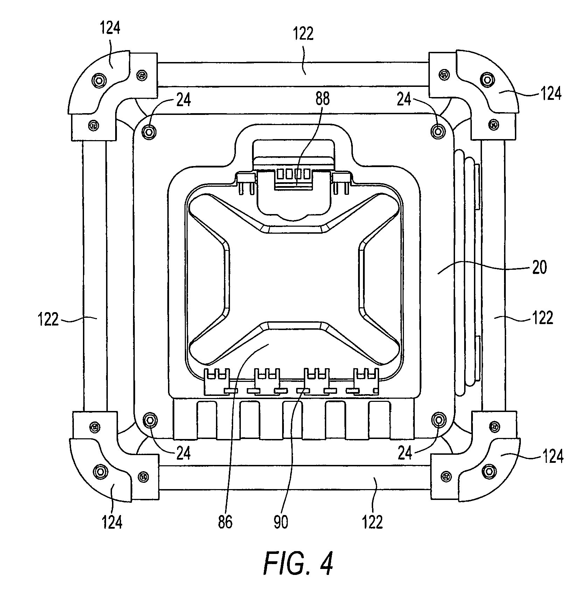

A preferred embodiment of a portable battery charging an audio unit is shown in the drawings and which includes a housing, indicated generally at 10, which is in the form of a cube, although it could be a cuboid if desired, as well as some other shaped volume. As illustrated, it includes a front face or wall 12, a left side face or wall 14, a top surface 16, a rear wall 20 (see FIG. 4) and a right side face or wall 22. The housing 10 is preferably made of a tough plastic or other molded material, and may be comprised of a few or several parts that structurally fit together in a rugged strong unit. For example, the front and back walls 12 and 20 may be generally flat unitary pieces which are connected together to one or more molded or otherwise formed front, top, bottom and rear walls that may be formed as one, two, or more components that are connected together with hex- head bolts or screws 24. While the housing 10 is in the shape of a cube, i.e., the size of each wall is generally the same, the housing may also be a cuboid where one or more of the length, height and width dimensions may be greater than the others, i.e., a rectangular box-like shape, or a more unusual volume may be defined by the walls of the housing.

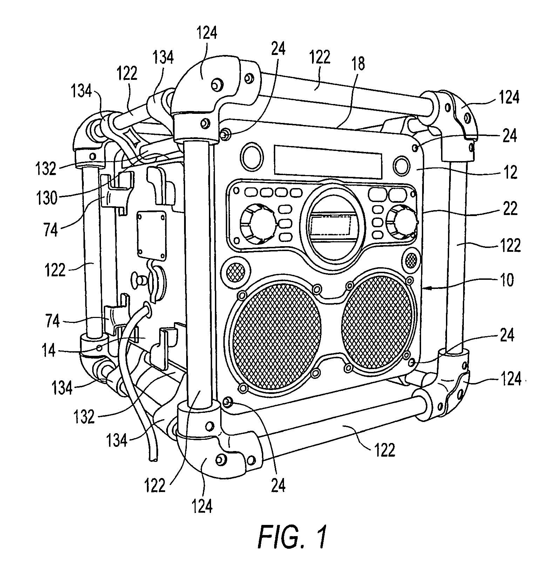

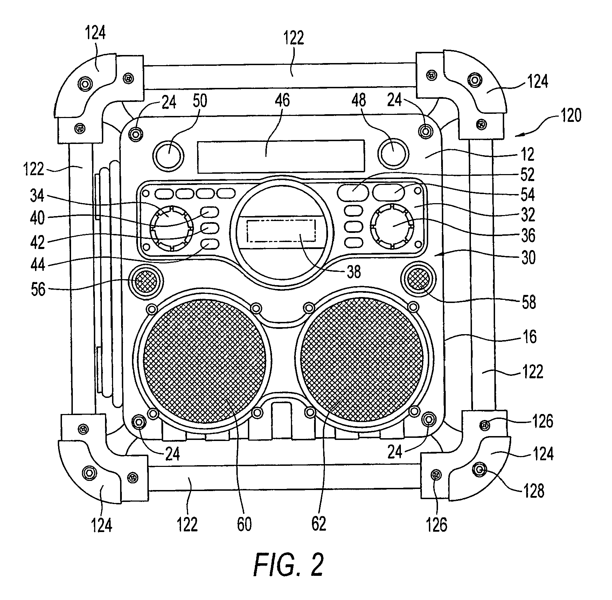

The preferred embodiment has an audio unit, indicated generally at 30, which is located in the front face 12 of the unit. As best shown in FIGS. 1 and 2, the audio unit comprises a radio that has a control panel 32 with a volume control 34, a tuning control 36, a display 38 for displaying the station identification as well as the current time. There are time adjust buttons 40, 42 and 44 with the button 42 controlling the hours, setting and the button 44 controlling the minutes setting. A CD player is also provided as part of the unit 30 and a CD tray 46 is positioned above the control panel 32. There is an eject button 48, a pause or standby button 50, as well as forward and backward adjustment buttons 52 and 54, respectively, located on the control panel 32. Speakers 56, 58, 60 and 62 are also provided and are located below the control panel 32.

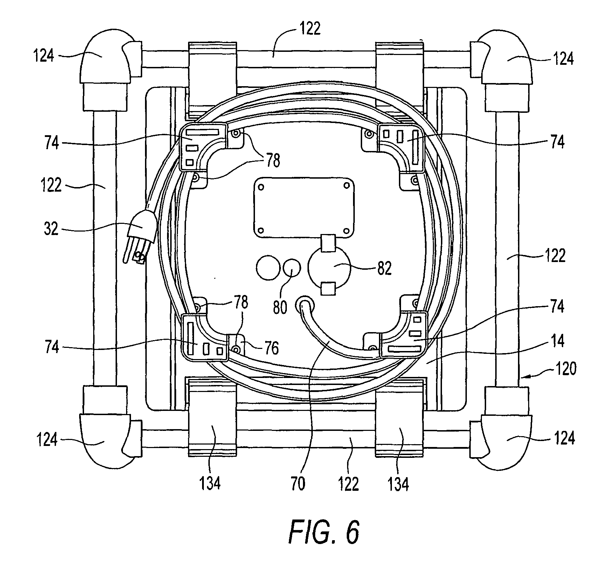

The unit can be connected or plugged into a source of AC power using a cord 70 having a 3-prong plug 72 as best shown in FIG. 6. The unit has a cord wrap structure comprising four outwardly extending flanges 74 that are arranged in a square around which the cord can be wrapped for storage. The flanges each have a base portion 76 for mounting to the sidewall 14 and are connected thereto by screws 78 or the like. It should also be understood that the flanges 74 may be integrally formed in the sidewall 14 if desired. A fuse 80 for the circuitry to be described is accessible on the left side wall 14 as is a DC receptacle 82 which is protected from the elements by a removable flexible plug that is preferably made of rubber or like material which can be inserted into the receptacle opening.

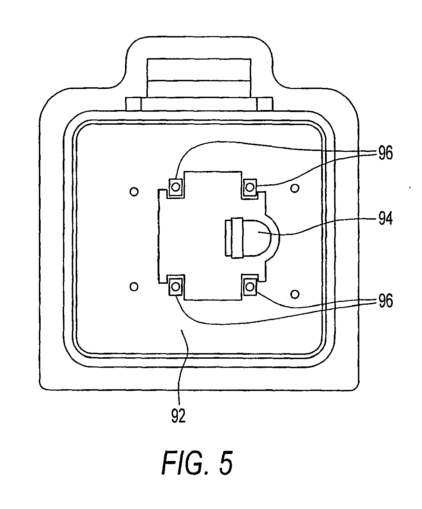

The unit has a charger internally located in the housing which is accessible through a charger door 86 as shown in FIG. 4. A handle 88 is provided at its upper end which engages a complimentary surface to hold the door shut, but which can be readily opened by a user without difficulty. A hinge 90 on the lower end of the door enables the door to be opened to reveal a holding chamber 92 that has a receptacle 94 at the bottom of the chamber 92 as shown in FIG. 5. The configuration of the receptacle 94 is complimentary to receive a battery pack such as those marketed by the Robert Bosch Tool Corporation. A number of spring clips 96 are also provided to retain the battery pack in place while it is charging, which requires the cord 78 to be connected to a source of AC power.

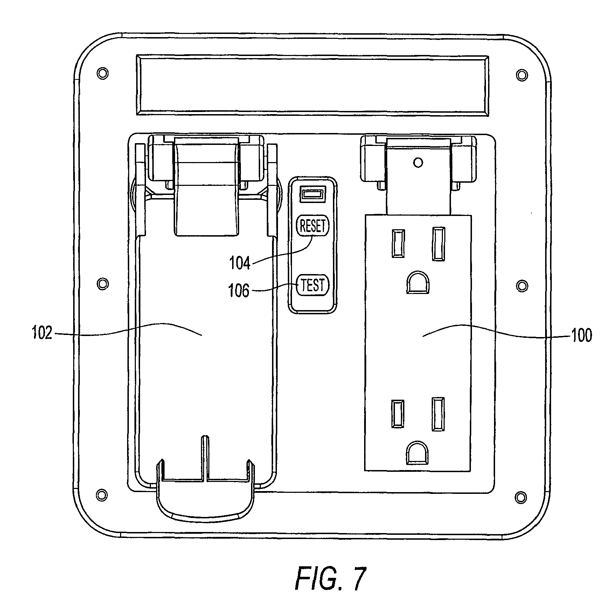

On the right sidewall 16 and referring to FIG. 7, a pair of duplex AC outlets 100 is located beneath doors 102 (only one of which is shown) that are hinged at the top of the outlet pair. While they may be standard duplex receptacles, it is preferred that they be ground fault circuit interrupters to provide an extra measure of safety for the users, particularly given the fact that the unit may be subjected to harsh weather conditions. As is standard for ground fault circuit interrupters, a reset button 104 and test button 106 are provided.

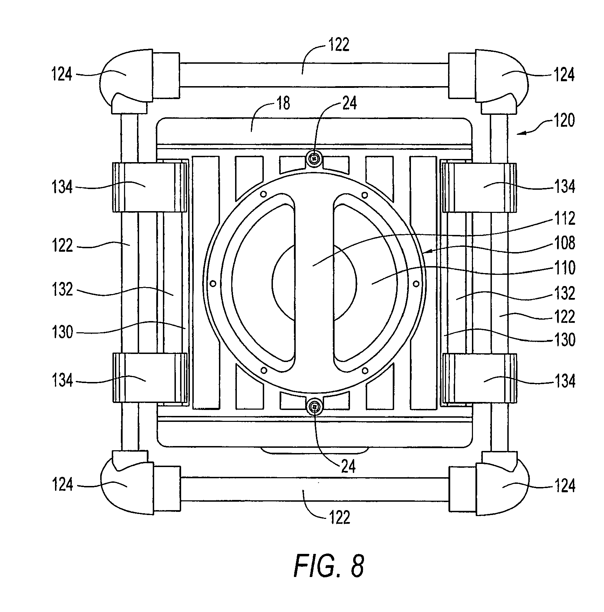

To conveniently carry the unit and referring to FIG. 8, the top face of the unit 18 has a handle 108 that is formed by a generally hemispherical recess 110 that has a bridging portion 112 that extends across the recess and which together define the handle 108 that can be used to carry the unit. It should be apparent that the size of the recess be large enough so that the user can insert his hand easily into the recess to grab the bridging portion 112.

As is apparent from the drawings, the unit has a frame structure, indicated generally at 120, which is shown in virtually all of the drawings, but is best shown in FIGS. 2, 4 and 8. The frame structure 120 is larger than the housing 10 in every direction and thereby provides a protective structure for the housing itself, as well as the components that are present on each of the front, rear and side faces of the housing. The form of the frame structure 20 is that of an open faced cube in the preferred embodiment, but could also be an open faced cuboid if desired. The frame structure has a number of elongated cylindrical rods 122 that are preferably made of hollow aluminum. The rods extend in spaced relation to the interface of each two walls as is apparent from the drawings. At the intersection of three walls which occurs at each of the eight corners of the frame structure 120, three cylindrical rods 122 are terminated in a three way connector 124 that is preferably made of strong, hard plastic or plastic-like material that is capable of withstanding abusive treatment without incurring damage. As best shown in FIGS. 2 and 4, each of the connectors has a pair of set screws 126 that fit within openings in the connector 124 and which engage the side of a cylindrical rod 122 in either the horizontal or vertical direction as shown in these drawings and which has a hex head screw 128 that is positioned to engage the rod 122 oriented in the direction transverse to the horizontal and vertical direction as shown in FIGS. 2 and 4. The set screw 128 may engage the inside diameter of the hollow rod 122 or it may engage a plug or other member that is inserted into each end of such transverse to the cylindrical rods 122, such that a secure attachment of the connector to the rod is achieved. With regard to the screws 126, they may merely tighten against the outer surface of the rods in which they contact, or they may be screwed into the side of the rods.

As best shown in FIGS. 1 and 8, the housing has an elongated recess 130 located at the corner of the top and sides of the housing as well as the bottom and sides of the housing. A shorter cylindrical rod preferably having the same construction and outside diameter 132 fits within each recess and is secured at opposite ends by fitting into correspondingly sized openings in the housing. The frame structure 120 is connected to these rods 132 by connecting links 134 which have openings in opposite ends through which rods 122 and 132 may pass. There is a link 134 at the end of each recess 130, meaning that a total of eight of them are utilized to secure the frame structure 120 to the housing 12. The links 134 are preferably made of the same material as the connectors 124 so that they will not be easily damaged by the typically rough treatment that the unit may receive on a construction site.

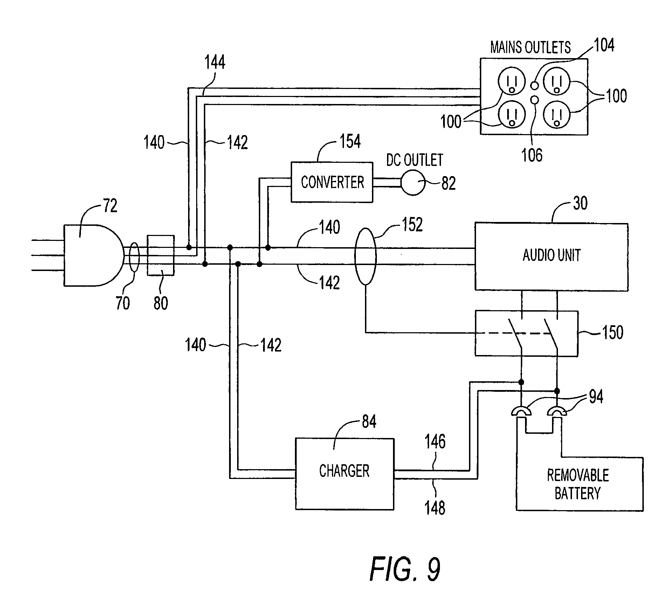

With regard to the electrical schematic of the unit embodying the present invention and referring to FIG. 9, the audio unit 30 is shown being connected to the cord 70 via fuse 80 and lines 140 and 142. A ground 144 also extends from the outlets 100 to the plug 72. Lines 140 and 142 also extend to the outlets 100 as well as to the charger 84, with the charger 84 having output lines 146 and 148 that extend to the receptacle 94 into which a removable battery can be inserted. Lines 146 and 148 also extend to a relay 150 that is controlled by a relay coil 152 which senses whether current is flowing in the lines 140 and 142. The relay 150 is a normally closed relay which is opened when the plug 72 is connected to a source of AC power which means that the audio unit is being driven by the AC power source. It should be understood that the audio unit may actually run on DC voltage and that the audio unit may have an internal voltage converter as part of its construction.

Another converter 154 may be provided to power the DC outlet 82. When the plug 72 is connected to an AC power source, the charger 84 is operational to charge the removable battery if it is placed in the receptacle 94 and the outlets 100 are available to supply power to other tools, lights or the like, as is the DC outlet 82. If the plug 72 is removed from AC power, the relay 150 will be close circuited so that the removable battery will be connected to the audio unit and can power the audio unit. It should be understood that the charger is incapable of powering the audio unit when the relay is open circuited as shown in the drawing and is incapable of powering the audio unit 30 when AC power is not applied to the circuit inasmuch as the charger 84 does not have a resident battery or other power source other than AC power through the lines 140 and 142.

## Claims

1. An apparatus comprising:
a housing (10) having a number of walls (12, 14, 20, 22), a top (16) and a bottom;
a charger (84) located in said housing (10) including a first and second output lines (146, 148) for charging a removable battery pack of the type which is used to power rechargeable hand tools and other tools;
a receptacle (94) operably connected to said charger (84) and being capable of receiving a removable battery pack to be charged by said charger (84), said first and second output lines (146, 148) extending into said receptacle (94);
an audio unit (30) for producing an audio signal located in said housing (10);
a cord (70) and plug (72) for connecting said apparatus to a source of AC power;
a first circuit (80, 140, 142) for connecting said cord (70) to said charger (84) and said audio unit (30), whereby AC power is applied to said audio unit (30) to power the same and AC power is also applied to said charger (84); and
a switching means (150) for isolating said audio unit (30) from said battery when AC power is applied to said audio unit (30) and for connecting said audio unit (30) to said battery when AC power is not applied to said audio unit (30), thereby enabling said battery pack to power said audio unit (30) when AC power is not applied thereto;
**characterized in that**
said switching means (150) comprises a relay (150) connected in circuit between the battery pack located in said receptacle (94) and said audio unit (30);
said first and second output lines (146, 148) extend into said relay (150); and
said switching means (150) further comprises a relay coil (152) connected in circuit between said cord (70) and said audio unit (30), said relay coil (152) sensing the presence of AC power being applied to said audio unit (30) and causing said relay (150) to open circuit and electrically isolate said first and second output lines (146, 148) from said audio unit (30) when AC power is applied and to connect said first and second output lines (146, 148) to said audio unit (30) when AC power is not applied.

2. An apparatus as defined in claim 1 further including at least one AC power receptacle (100) connected in said first circuit (80, 140, 142) so that AC power can be provided to said receptacle when said cord (70) and plug (72) is connected to a source of AC power.

3. An apparatus as defined in claim 1 further including an AC to DC converter (154) connected in said first circuit (80, 140, 142) and at least one DC power receptacle connected to said converter (154).

4. An apparatus as defined in claim 2 further including a ground fault circuit interrupter (104, 106) connected in said first circuit (80, 140, 142) between said at least one AC power receptacle (100) and said cord (70).

5. An apparatus as defined in claim 1 wherein said audio unit (30) comprises a radio.

6. An apparatus as defined in claim 5 wherein said audio unit (30) further comprises a CD player.

7. An apparatus as defined in claim 1 wherein said housing (10) has a generally cuboid shape.

8. An apparatus as defined in claim 7 wherein said housing (10) has a generally cube shape.

9. An apparatus as defined in claim 7 further comprising a frame structure (120) that is in the shape of an open faced cuboid, with each leg being connected to two other legs at right angles, said frame structure (120) being larger than said housing (10) and being attached thereto at multiple connection points, said frame structure (120) providing protection for said housing (10).

10. An apparatus as defined in claim 9 wherein said frame structure (120) comprises a plurality of elongated generally cylindrical frame members (122, 132) that are connected to one another by connector fittings (124) at the eight corners.

11. An apparatus as defined in claim 10 wherein said housing (10) has a top (16), bottom, front wall, rear wall and two side walls (12, 22), and recesses located at the interface of the top (16) and the two side walls (12, 22) and the bottom and the two side walls (12, 22), an elongated cylindrical housing (10) member located in each recess and attached to said housing (10) at opposite ends, a plurality of linking connectors (134) being attached to each housing (10) member and an adjacent frame member, to thereby connect said frame structure (120) to said housing (10).

12. An apparatus as defined in claim 1 wherein said audio unit (30) has operating controls and displays located in a front wall of said housing (10).

13. An apparatus as defined in claim 1 further comprising an access door (86) located in a rear wall for accessing a chamber (92) that includes a receptacle (94) for receiving a battery pack for charging by said charger (84).

14. An apparatus as defined in claim 2 wherein said at least one AC power receptacle (100) is located in a first side wall.

15. An apparatus as defined in claim 1 wherein said cord (70) and plug (72) extend from a second side wall, said apparatus further including a cord (70) wrap structure on said second side wall.

16. An apparatus as defined in claim 1 wherein said top (16) has a recess therein with a bridging portion extending across said recess and forming a handle for carrying said apparatus.

## Patentansprüche

1. Vorrichtung, aufweisend:
ein Gehäuse (10), welches eine Anzahl von Wänden (12, 14, 20, 22), eine Oberseite (16) und einen Boden aufweist;
ein Ladegerät (84), welches in dem Gehäuse (10) angeordnet ist, welches eine erste und zweite Ausgangsleitung (146, 148) zum Laden eines entfernbaren Batterie-Packs von der Art, welches verwendet wird, um wiederaufladbare Handwerkzeuge und andere Werkzeuge mit Energie zu versorgen, aufweist;
eine Aufnahme (94), welche mit dem Ladegerät (84) wirkverbunden ist und fähig ist ein entfernbares Batterie-Pack zu erhalten, um von dem Ladegerät (84) aufgeladen zu werden, wobei die erste und zweite Ausgangsleitung (146, 148) sich in die Aufnahme (94) erstrecken;
eine Audioeinheit (30) zum Erzeugen eines Audiosignals, welche in dem Gehäuse (10) angeordnet ist;
ein Kabel (70) und einen Stecker (72) zum Koppeln der Vorrichtung mit einer Wechselstromquelle;
einen ersten Schaltkreis (80, 140, 142) zum Koppeln des Kabels (70) mit dem Ladegerät (84) und mit der Audioeinheit (30), wodurch Wechselstrom an die Audioeinheit (30) angelegt wird, um Energie derselbigen zur Verfügung zu stellen und außerdem Wechselstrom an das Ladegerät (84) angelegt wird; und
ein Schaltmittel (150) zum Isolieren der Audioeinheit (30) von der Batterie, wenn Wechselstrom an die Audioeinheit (30) angelegt wird, und zum Koppeln der Audioeinheit (30) mit der Batterie, wenn Wechselstrom nicht an die Audioeinheit (30) angelegt wird, wodurch dem Batterie-Pack ermöglicht wird die Audioeinheit (30) mit Energie zu versorgen, wenn Wechselstrom daran nicht angelegt wird;
**dadurch gekennzeichnet,**
**dass** das Schaltmittel (150) ein Relais (150) aufweist, welches in dem Schaltkreis zwischen dem Batterie-Pack, welches in der Aufnahme (94) angeordnet ist, und der Audioeinheit (30) verbunden ist;
**dass** die erste und zweite Ausgangsleitung (146, 148) sich in das Relais (150) erstrecken; und
**dass** das Schaltmittel (150) ferner eine Relaisspule (152) aufweist, welche in dem Schaltkreis zwischen dem Kabel (70) und der Audioeinheit (30) verbunden ist; wobei die Relaisspule (152) die Anwesenheit eines Wechselstroms wahrnimmt, welcher an die Audioeinheit (30) angelegt wird und bewirkt, dass das Relais (150) den Schaltkreis öffnet und die erste und zweite Ausgangsleitung (146, 148) von der Audioeinheit (30) isoliert, wenn Wechselstrom angelegt wird, und die erste und zweite Ausgangsleitung (146, 148) mit der Audioeinheit (30) verbindet, wenn Wechselstrom nicht angelegt wird.

2. Vorrichtung nach Anspruch 1,
ferner zumindest eine Wechselstromaufnahme (100) aufweisend, welche mit dem ersten Schaltkreis (80, 140, 142) derart verbunden ist, dass Wechselstrom zu der Aufnahme zur Verfügung gestellt werden kann, wenn das Kabel (70) und der Stecker (72) mit einer Wechselstromquelle verbunden sind.

3. Vorrichtung nach Anspruch 1,
ferner einen Wandler (154) zum Wandeln von Wechselstrom in Gleichstrom aufweisend, welcher mit dem ersten Schaltkreis (80, 140, 142) verbunden ist, und zumindest eine Gleichstromaufnahme aufweisend, welche mit dem Wandler (154) verbunden ist.

4. Vorrichtung nach Anspruch 2,
ferner einen Fehlerstromschutzschalter (104, 106) aufweisend, welcher in dem ersten Schaltkreis (80, 140, 142) zwischen zumindest einer Wechselstromaufnahme (100) und dem Kabel (70) verbunden ist.

5. Vorrichtung nach Anspruch 1,
wobei die Audioeinheit (30) ein Radio aufweist.

6. Vorrichtung nach Anspruch 5,
wobei die Audioeinheit (30) ferner einen CD-Spieler aufweist.

7. Vorrichtung nach Anspruch 1,
wobei das Gehäuse (10) eine im Wesentlichen quaderförmige Form aufweist.

8. Vorrichtung nach Anspruch 7,
wobei das Gehäuse (10) eine im Wesentlichen würfelförmige Form aufweist.

9. Vorrichtung nach Anspruch 7,
ferner eine Rahmenstruktur (120) aufweisend, die in der Form eines geöffneten Quaders ist, wobei jedes Bein mit zwei anderen Beinen in einem rechten Winkel verbunden ist, wobei die Rahmenstruktur (120) größer als das Gehäuse (10) ist und an diesem an vielen Verbindungspunkten befestigt ist, wobei die Rahmenstruktur (120) Schutz für das Gehäuse (10) zur Verfügung stellt.

10. Vorrichtung nach Anspruch 9,
wobei die Rahmenstruktur (120) eine Vielzahl von länglichen, im Wesentlichen zylindrischen Rahmenbauteilen (122, 132) aufweist, welche miteinander durch Anschlussarmaturen (124) an den acht Ecken verbunden sind.

11. Vorrichtung nach Anspruch 10,
wobei das Gehäuse (10) eine Oberseite (16), einen Boden, eine vordere Wand, eine Rückwand und zwei Seitenwände (12, 22) aufweist, und wobei Ausnehmungen an der Schnittstelle der Oberseite (16) und an den zwei Seitenwänden (12, 22) und dem Boden und den zwei Seitenwänden (12, 22) angeordnet sind, wobei ein längliches, zylindrisches Gehäusebauteil in jeder Ausnehmung angeordnet ist und zu dem Gehäuse (10) an gegenüberliegenden Enden befestigt ist, wobei eine Vielzahl von Verbindungssteckern (134) zu jedem Gehäusebauteil und einem benachbarten Rahmenbauteil befestigt ist, um **dadurch** die Rahmenstruktur (120) und das Gehäuse (10) zu verbinden.

12. Vorrichtung nach Anspruch 1,
wobei die Audioeinheit (30) Betriebssteuerungen und Anzeigen aufweist, welche in einer vorderen Wand des Gehäuses (10) angeordnet sind.

13. Vorrichtung nach Anspruch 1,
ferner eine Zugangstür (86) aufweisend, welche in einer hinteren Wand zum Zugreifen in eine Kammer (92) angeordnet ist, welche eine Aufnahme (94) zum Aufnehmen eines Batterie-Packs zum Laden durch das Ladegerät (84) aufweist.

14. Vorrichtung nach Anspruch 2,
wobei zumindest eine Wechselstromaufnahme (100) in einer ersten Seitenwand angeordnet ist.

15. Vorrichtung nach Anspruch 1,
wobei das Kabel (70) und der Stecker (72) sich von einer zweiten Seitenwand erstrecken, wobei die Vorrichtung ferner eine Kabelaufwickelstruktur in der zweiten Seitenwand aufweist.

16. Vorrichtung nach Anspruch 1,
wobei die Oberseite (16) eine Ausnehmung mit einem Brückenabschnitt darin aufweist, welcher sich quer über die Ausnehmung erstreckt und einen Griff zum Tragen der Vorrichtung ausbildet.

## Revendications

1. Appareil comprenant :
un logement (10) ayant un certain nombre de parois (12, 14, 20, 22), un dessus (16) et un dessous ;
un chargeur (84) situé dans ledit logement (10) incluant une première et une seconde lignes de sortie (146, 148) pour charger un bloc de batteries amovible du type qui est utilisé pour alimenter des outils manuels rechargeables et d'autres outils ;
un réceptacle (94) relié de manière opérationnelle audit chargeur (84) et susceptible de recevoir un bloc de batteries amovible à charger par ledit chargeur (84), lesdites première et seconde lignes de sortie (146, 148) s'étendant dans ledit réceptacle (94) ;
une unité audio (30) pour produire un signal audio situé dans ledit logement (10) ;
un cordon (70) et une prise (72) pour relier ledit appareil à une source de courant secteur ;
un premier circuit (80, 140, 142) pour relier ledit cordon (70) audit chargeur (84) et ladite unité audio (30), de sorte qu'un courant secteur est appliqué à ladite unité audio (30) pour alimenter cette dernière et un courant secteur est également appliqué audit chargeur (84) ; et
un moyen de commutation (150) pour isoler ladite unité audio (30) de ladite batterie quand un courant secteur est appliqué à ladite unité audio (30) et pour relier ladite unité audio (30) à ladite batterie quand un courant secteur n'est pas appliqué à ladite unité audio (30), permettant de ce fait audit bloc de batteries d'alimenter ladite unité audio (30) quand un courant secteur n'est pas appliqué à ce dernier ;
**caractérisé en ce que**
ledit moyen de commutation (150) comprend un relais (150) relié en circuit entre le bloc de batteries situé dans ledit réceptacle (94) et ladite unité audio (30) ;
lesdites première et seconde lignes de sortie (146, 148) s'étendent dans ledit relais (150) ; et
ledit moyen de commutation (150) comprend en outre une bobine de relais (152) reliée en circuit entre ledit cordon (70) et ladite unité audio (30), ladite bobine de relais (152) détectant la présence de courant secteur appliqué à ladite unité audio (30) et amenant ledit relais (150) à ouvrir le circuit et à électriquement isoler lesdites première et seconde lignes de sortie (146, 148) de ladite unité audio (30) quand un courant secteur est appliqué et pour relier lesdites première et seconde lignes de sortie (146, 148) à ladite unité audio (30) quand un courant secteur n'est pas appliqué.

2. Appareil selon la revendication 1 incluant en outre au moins un réceptacle de courant secteur (100) relié dans ledit premier circuit (80, 140, 142) de sorte qu'un courant secteur peut être fourni audit réceptacle quand ledit cordon (70) et ladite prise (72) sont reliés à une source de courant secteur.

3. Appareil selon la revendication 1 incluant en outre un convertisseur de courant alternatif en courant continu (154) relié dans ledit premier circuit (80, 140, 142) et au moins un réceptacle de courant continu relié audit convertisseur (154).

4. Appareil selon la revendication 2 incluant en outre un interrupteur de circuit de défaut de masse (104, 106) relié dans ledit premier circuit (80, 140, 142) entre ledit au moins un réceptacle de courant secteur (100) et ledit cordon (70).

5. Appareil selon la revendication 1, dans lequel ladite unité audio (30) comprend une radio.

6. Appareil selon la revendication 5 dans lequel ladite unité audio (30) comprend en outre un lecteur de CD.

7. Appareil selon la revendication 1, dans lequel ledit logement (10) a une forme globalement cubique.

8. Appareil selon dans la revendication 7, dans lequel ledit logement (10) a globalement une forme de cube.

9. Appareil selon dans la revendication 7 comprenant en outre une structure de cadre (120) qui est en forme d'un cuboïde à face ouverte, chaque branche étant reliée à deux autres branches à angle droit, ladite structure de cadre (120) étant plus grande que ledit logement (10) et étant attachée à cette dernière en de multiples de points connexion, ladite structure de cadre (120) fournissant une protection pour ledit logement (10).

10. Appareil selon la revendication 9, dans lequel ladite structure de cadre (120) comprend une pluralité d'éléments de cadre allongés globalement cylindriques (122, 132) qui sont reliés les uns aux autres par des raccords de connecteur (124) au niveau des huit angles.

11. Appareil selon la revendication 10, dans lequel ledit logement (10) a un dessus (16), un dessous, une paroi avant, une paroi arrière et deux parois latérales (12, 22), et des parties en retrait situées au niveau de l'interface du sommet (16) et des deux parois latérales (12, 22) et du dessous et des deux parois latérales (12, 22), un élément de logement cylindrique allongé (10) situé dans chaque partie en retrait et attaché audit logement (10) au niveau d'extrémités opposées, une pluralité de connecteurs de liaison (134) étant attachés à chaque élément de logement (10) et un élément de cadre adjacent, pour relier de ce fait ladite structure de cadre (120) audit logement (10).

12. Appareil selon la revendication 1, dans lequel ladite unité audio (30) a des commandes de fonctionnement et des afficheurs situés dans une paroi avant dudit logement (10).

13. Appareil selon la revendication 1, comprenant en outre une trappe d'accès (86) située dans une paroi arrière pour avoir accès à une chambre (92) qui inclut un réceptacle (94) pour recevoir un bloc de batteries à charger par ledit chargeur (84).

14. Appareil selon la revendication 2, dans lequel ledit au moins un réceptacle de courant secteur (100) est situé dans une première paroi latérale.

15. Appareil selon la revendication 1 dans lequel ledit cordon (70) et ladite prise (72) s'étendent à partir d'une seconde paroi latérale, ledit appareil incluant en outre une structure d'enveloppe de cordon (70) sur ladite seconde paroi latérale.

16. Appareil selon la revendication 1 dans lequel ledit dessus (16) a une partie en retrait en son sein avec une partie formant pont s'étendant de part et d'autre de ladite partie en retrait et formant une poignée pour porter ledit appareil.
